# EUROPÄISCHE PATENTANMELDUNG

(11) **EP 0 750 078 A1**
(43) Veröffentlichungstag der Anmeldung: **27.12.1996**
(21) Anmeldenummer: 96104025.0
(22) Anmeldetag: 14.03.1996
(51) Int. Cl.: E04C 2/24, B32B 5/26, B32B 7/14

(54) **Verfahren zur Herstellung einer Akustikplatte und Akustikplatte nach diesem Verfahren**

(30) Priorität: 20.06.1995 DE 19522216
(71) Anmelder: Wilhelmi Werke GmbH & Co. KG, D-35633 Lahnau (DE)
(72) Erfinder: Bender, Klaus, Dipl.-Chem., 35444 Biebertal (DE); Fiedler, Bernd, Dipl.-Ing., 35578 Wetzlar (DE)
(74) Vertreter: Missling, Arne, Dipl.-Ing.

(57) **Zusammenfassung**

Eine aus einer Trägerplatte (T) und diese einer- oder beiderseits bedeckenden Deckplatten (D) bestehende Akustikplatte kann feuersicher mittels eines anorganischen Klebstoffes ausgebildet werden, ohne daß ihre schalldämmende Eigenschaft gestört wird, wenn dieser Klebstoff in Form eines Klebstoffrasters (K) aufgetragen wird und dazu ein dem Siebdruck analoges Auftragsverfahren für den Klebstoff verwendet wird.

## Beschreibung

Die Erfindung betrifft ein Verfahren zur Herstellung einer Akustikplatte in Sandwich-Bauweise zur Bildung von schallabsorbierenden Raum-Decken oder -Wänden, bestehend aus einer homogenen Trägerplatte aus einem geschäumtem Werkstoff und aus einer ein- oder beidseitig mit der Trägerplatte durch einen Klebstoff verbundenen Deckschicht aus einem Vlies oder einem Gewebe sowie eine Akustikplatte nach diesem Verfahren.

Eine derartige Akustikplatte ist aus der EP-Patentanmeldung 93118865.0 bereits bekannt. Die aus einem porösen, elastischen Kunstharz (Melamin) bestehende Trägerplatte wird darin hinsichtlich ihres Schallabsorptionsgrades verbessert, wenn sie (einer- oder beiderseits) mit dünnen Deckschichten aus einem Vlies oder Gewebe von Glas-, Kunst- oder Naturfasern bedeckt wird, wobei sich in bekannter Weise auch die Formstabilität der gesamten Akustikdecke verbessern läßt. Zur Verbindung der Deckschicht(en) mit der Trägerplatte ist die Verwendung eines Klebstoffes vorgesehen, der dabei so aufgetragen sein soll, daß die Porosität der Träger platte und der Deckschichten nicht gestört ist und die Raumluft durch die Akustikplatte zirkulieren kann.

Es ist fachüblich, den Klebstoff mittels einer geeigneten Rolle oder dergleichen Verteil-Werkzeug auf die dafür vorgesehene Grundfläche zu bringen. Die wegen ihres günstigen Verhaltens in Bezug auf den erforderlichen Brandschutz vorteilhaft verwendeten anorganischen Klebstoffe müssen dabei relativ dick aufgetragen werden, um eine lang andauernde, belastbare Haftung der Deckschicht(en) auf der Trägerplatte sicherzustellen. Dabei läßt es sich nicht vermeiden, daß in unerwünschter Weise eine viel größere Fläche der Trägerplatte mit Klebstoff zugesetzt wird und für die Geräuschdämpfung verlorengeht, als es für eine volle Funktion der Akustikplatte zuträglich ist. Die Forderung nach einer als Zwischenschicht zwischen den Deckschichten und der Trägerplatte nur partiell vorhandenen Klebstoff-Schicht ist auf diese Weise nur schwer zu erfüllen und hängt hinsichtlich ihrer ordnungsgemäßen Ausbildung weitgehend von der Geschicklichkeit und der Sorgfalt der ausführenden Arbeitskraft ab.

Die Erfindung hat sich deshalb die Aufgabe gestellt, ein Verfahren zur Herstellung einer Akustikplatte der eingangs näher bezeichneten Art sowie eine nach einem solchen Verfahren hergestellte Akustikplatte anzugeben, bei der unter Beibehaltung eines anorganischen Klebstoffes zur Befestigung der Deckschicht(en) dafür gesorgt ist, daß, unabhängig von der Handfertigkeit und Zuverlässigkeit der ausführenden Arbeitskraft, nach dem Verkleben die Funktionsfähigkeit der Akustikplatte dadurch gewährleistet ist, daß der Klebstoff die dafür wichtigen Poren der Trägerplatte genausowenig vollständig oder überwiegend verstopft, wie er die Deckschicht(en) nicht so zu bedecken vermag, daß Schallwellen aus dem Raum gar nicht erst bis zu der Trägerplatte gelangen können.

Erfindungsgemäß wird die Aufgabe dadurch gelöst, daß der Klebstoff mittels eines Siebes in einer dem Siebdruckverfahren entsprechenden Weise als ein die zugehörige Grundfläche nur partiell bedeckender Klebstoff-Raster aufgetragen und danach die jeweilige Deckschicht mit der Trägerplatte so verbunden wird, daß in der fertiggestellten Akustikplatte die Form des Klebstoff-Rasters erhalten bleibt insoweit, als dann die Oberfläche der Trägerplatte nur partiell mit dem Klebstoff bedeckt ist. Der Klebstoff kann auf das Vlies aufgebracht werden. Vorteilhaft ist es jedoch, wenn der Klebstoff auf die Trägerplatte aufgebracht wird.

Auf diese Weise kann mittels einer seit langem auf ganz anderen Gebieten des Werkstoff-Verbunds bestens eingeführten und bewährten Arbeitstechnik zwanglos sichergestellt werden, daß der Klebstoff ganz gleichmäßig auf der Grundfläche verteilt aufgebracht wird und von vornherein das Verhältnis der von dem Kleber bedeckten zu der von diesem freibleibenden Fläche durch die Gestaltung des verwendeten Siebes festgelegt werden kann. Die Flächenpressung auf die Deckschicht bei deren Anlegen an die Trägerplatte wird in Abhängigkeit von der Dicke und Konsistenz des aufgetragenen Klebstoffes so gewählt, daß eine ausreichend feste Verbindung mit der Trägerplatte erfolgt, ohne daß der Bedeckungsgrad des Klebstoffes wesentlich erhöht wird. Die Funktion der Akustikplatte bleibt auf diese Weise erhalten, und gleichzeitig werden dabei die Fasern des Vlieses oder des Gewebes der Deckschicht(en) gleichmäßig miteinander verklebt. Je nach dem verwendeten Klebstoff kann das Klebstoff-Raster mehr oder weniger weitmaschig ausgebildet und mit wenig Aufwand den jeweiligen Verhältnissen angepaßt werden.

Das beim Auftragen des Klebstoffes verwendete Sieb kann so ausgeführt sein, daß der Klebstoff als Punktraster aufgebracht wird, insbesondere, wenn an die Formstabilität der Akustikplatte nur geringe Ansprüche gestellt werden. Es ist aber bevorzugt so ausgeführt, daß der Klebstoff als Gitterraster aufgebracht wird, so daß trotz nur partieller Kontaktierung der Grundfläche mit dem Klebstoff ein hohes Maß an Steifigkeit der Akustikplatte erreichbar ist, weil der Klebstoff nach dem Aushärten bereits selbst ein relativ steifes, flächiges Gebilde erzeugt.

Ein derartiger Klebstoff ist besonders wirksam, wenn er aus einem Gemisch von 30 bis 50 % Wasserglas, 5 bis 10 % Farbpigmenten, Rest Füllstoffe zusammengesetzt ist. Als Füllstoffe werden vorteilhaft Kreide und/oder Tonerde verwendet.

Eine Akustikplatte nach dem erfindungsgemäßen Verfahren ist am besten mit einer Trägerplatte versehen, die mit einer Dicke von 10 bis 30 mm, vorzugsweise von 20 mm, und einer spezifischen Masse von 8 bis 70 kg/m³, vorzugsweise 10 kg/m³, ausgeführt ist. Die Deckschicht kann eine Dicke von 0,4 bis 0,8 mm, vorzugsweise 0,5 mm aufweisen.

Mit Hilfe des erfindungsgemäßen Verfahrens kann demzufolge eine Akustikplatte hergestellt werden, die hoch lärm- und auch wärmeisolierend verwendbar ist und dabei trotz des außerordentlich geringen Gewichtes nach wie vor eine hohe Formstabilität besitzt, ohne daß die Deckschicht(en) mittels eines homogenen Klebstoff-Filmes auf der Trägerplatte befestigt ist (sind). Die Akustikplatte genügt bei einer erfindungsgemäßen Anfertigung durch den Verzicht auf organische Klebstoffe darüberhinaus auch allen Anforderungen des Brandschutzes von Gebäuden.

Die Erfindung wird nachstehend an Hand der Zeichnung an einem Ausführungsbeispiel näher erläutert. Es zeigen:
- Fig. 1: eine erfindungsgemäße Akustikplatte in einer ersten und
- Fig. 2: in einer weiteren Ausbildung,
beide in schematischer, räumlicher Darstellung.

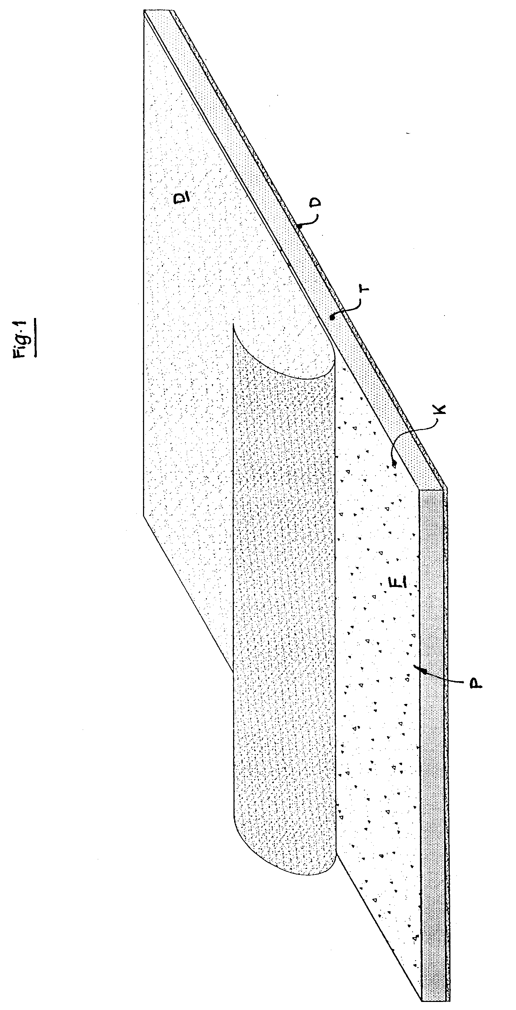

In der Fig. 1 der Zeichnung ist eine erfindungsgemäße Akustikplatte zu erkennen, die aus einer Trägerplatte T aus einem geschäumten Kunststoffharz, beispielsweise aus Melamin, und beiderseits je einer Deckschicht D besteht, die durch einen Klebstoff K miteinander verbunden sind. Die obere Deckschicht D aus einem biegsamen, dünnen Glasvlies ist teilweise noch nicht an die Trägerplatte T angelegt und zeigt auf deren als Grundfläche F für den Kleber K dienenden oberen Deckfläche der Trägerplatte T einen Punktraster P aus gleichförmig über die Grundfläche F verteilten, im "Siebdruckverfahren" punktförmig aufgebrachten Klebstoff-Partikeln.

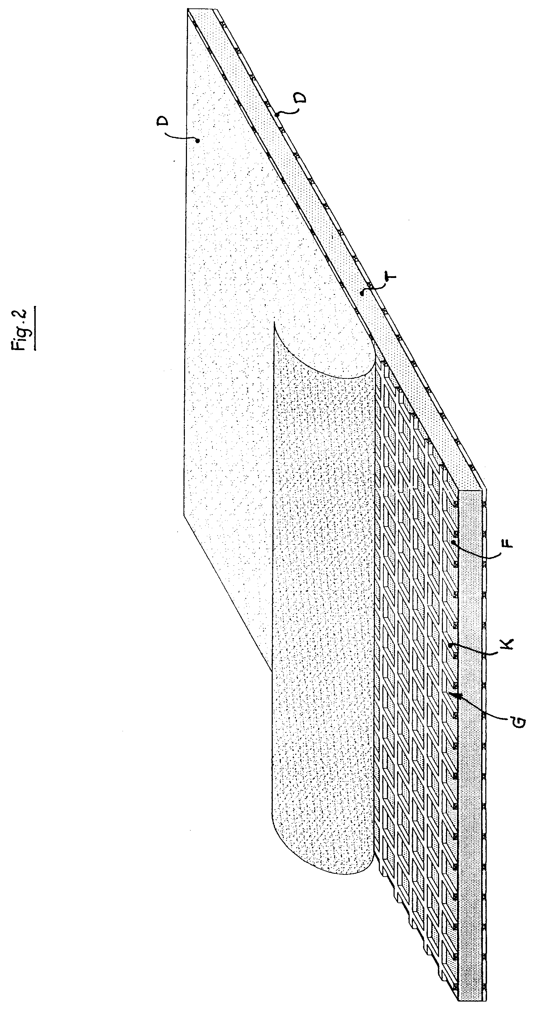

In ähnlicher Weise ist die Akustikplatte in der Fig. 2 ausgebildet, jedoch ist hier beim "Siebdruckverfahren" anstelle des Punktrasters P mit Hilfe eines veränderten Siebes ein Gitterraster G entstanden, das aus dem die Gitterleisten bildenden Klebstoff K besteht und, ausgehärtet, eine besonders formstabile Akustikplatte liefert.

## Patentansprüche

1. Verfahren zur Herstellung einer Akustikplatte in Sandwich-Bauweise zur Bildung von schallabsorbierenden Raum-Decken oder -Wänden, bestehend aus einer homogenen Trägerplatte (T) aus einem geschäumtem Werkstoff und aus einer ein- oder beidseitig mit der Trägerplatte (T) durch einen Klebstoff (K) verbundenen Deckschicht (D) aus einem Vlies oder einem Gewebe, dadurch gekennzeichnet, daß der Klebstoff (K) mittels eines Siebes in einer dem Siebdruckverfahren entsprechenden weise als ein die zugehörige Grundfläche nur partiell bedeckender Klebstoff-Raster aufgetragen und danach die jeweilige Deckschicht (D) mit der Trägerplatte (T) so verbunden wird, daß in der fertiggestellten Akustikplatte die Form des Klebstoff-Rasters erhalten bleibt insoweit, als dann die Oberfläche der Trägerplatte (T) nur partiell mit dem Klebstoff (K) bedeckt ist.

2. Verfahren nach Anspruch 1, dadurch gekennzeichnet, daß der Klebstoff (K) auf die Trägerplatte (T) oder auf die Deckschicht (D) aufgebracht wird.

3. Verfahren nach Anspruch 1 oder 2, dadurch gekennzeichnet, daß das beim Auftragen des Klebstoffes (K) verwendete Sieb so ausgeführt ist, daß der Klebstoff (K) als Punktraster (P) aufgebracht wird.

4. Verfahren nach Anspruch 1 oder 2, dadurch gekennzeichnet, daß das beim Auftragen des Klebstoffes (K) verwendete Sieb so ausgeführt ist, daß der Klebstoff (K) als Gitterraster (G) aufgebracht wird.

5. Verfahren nach einem der Ansprüche 1 bis 4, dadurch gekennzeichnet, daß der Klebstoff (K) aus einem Gemisch von 30 bis 50 % Wasserglas, 5 bis 10 % Farbpigmenten, Rest Füllstoffe zusammengesetzt ist.

6. Verfahren nach Anspruch 5, dadurch gekennzeichnet, daß als Füllstoffe Kreide und/oder Tonerde verwendet werden.

7. Akustikplatte nach einem der Ansprüche 1 bis 6, dadurch gekennzeichnet, daß eine Trägerplatte (T) mit einer Dicke von 10 bis 30 mm, vorzugsweise von 20 mm, und einer spezifischen Masse von 8 bis 70 kg/m³, vorzugsweise 10 kg/m³, ausgeführt ist.

8. Akustikplatte nach einem der Ansprüche 1 bis 6, dadurch gekennzeichnet, daß die Deckschicht (D) eine Dicke von 0,4 bis 0,8 mm, vorzugsweise 0,5 mm aufweist.
